# EUROPÄISCHE PATENTANMELDUNG

(11) **EP 3 037 370 A1**
(43) Veröffentlichungstag der Anmeldung: **29.06.2016**
(21) Anmeldenummer: 14199600.9
(22) Anmeldetag: 22.12.2014
(51) Int. Cl.: B65G 47/28, B65G 47/68, B65G 47/91, B65B 47/00, B65B 51/00, B65B 9/04, B65B 57/00

(54) **Verpackungsanlage**

(71) Anmelder: MULTIVAC Sepp Haggenmüller SE & Co. KG, 87787 Wolfertschwenden (DE)
(72) Erfinder: Lang, Michael, 87642 Buching (DE)
(74) Vertreter: Grünecker Patent- und Rechtsanwälte PartG mbB

(57) **Zusammenfassung**

Die Erfindung betrifft eine Verpackungsanlage (1) und ein Verfahren zum Betrieb einer solchen Verpackungsanlage (1), die eine Tiefziehverpackungsmaschine (2), einen Vereinzelungsroboter (6), eine Transportvorrichtung (59 und einen Checkweigher (9) umfasst. Die Erfindung zeichnet sich dadurch aus, dass ein weitestgehend konstanter Produktstrom mit annähernd konstanten Produktabständen dem Checkweigher zugeführt werden kann.

## Beschreibung

Die Erfindung bezieht sich auf eine Verpackungsanlage gemäß dem Oberbegriff des Anspruchs 1 und auf ein Verfahren zum Betrieb einer solchen Verpackungsanlage.

Aus der EP 2 733 095 A1 ist eine Verpackungsanlage bekannt, bei der eine Tiefziehverpackungsmaschine ein Format von Verpackungen in Form von mehreren Spuren und Reihen einer Umsetzeinrichtung bereitstellt, die dazu konfiguriert ist, jeweils eine Spur von Verpackungen von der Tiefziehverpackungsmaschine aufzunehmen und auf eine Transporteinrichtung abzusetzen. Die Verpackungen selbst werden entlang der Transporteinrichtung mittels zweier Beschleunigungsbänder in Transportrichtung zueinander beabstandet, um anschließend die Verpackungen einzeln jeweils einem Inspektionsmodul zuzuführen bzw. durch dieses hindurch zu transportieren.

Die EP 2 557 043 A1 offenbart eine Sauggreiferanordnung, die mehrere Verpackungen aufnimmt und die einzelnen Verpackungen während einer Umsetzphase derart zueinander annähert, dass sich jeweils die Ränder von zwei benachbarten Verpackungen überlappen, um den Platzbedarf in einer Endverpackung zu minimieren.

Aufgabe der vorliegenden Erfindung ist es, eine Verpackungsanlage dahingehend zu verbessern, dass ein verbessertes Generieren von konstanten Verpackungsabständen zwischen der Tiefziehverpackungsmaschine und einem Inspektionsmodul, beispielsweise einem Checkweigher, ermöglicht ist.

Diese Aufgabe wird gelöst durch eine Verpackungsanlage mit den Merkmalen des Anspruchs 1 bzw. durch ein Verfahren zum Betrieb einer solchen Verpackungsanlage mit den Merkmalen des Anspruchs 6. Vorteilhafte Weiterbildungen der Erfindung sind in den Unteransprüchen angegeben.

Die erfindungsgemäße Verpackungsanlage umfasst eine Tiefziehverpackungsmaschine, einen Vereinzelungsroboter zum Umsetzen von Verpackungen, eine Transportvorrichtung und einen Checkweigher, d.h. eine dynamische Kontrollwaage, wobei der Vereinzelungsroboter einen Greifer mit mehreren zueinander verstellbaren Produktaufnehmern aufweist. Die Verpackungsanlage zeichnet sich dadurch aus, dass der Greifer verstellbar ist zwischen einer ersten Stellung, in der einander benachbarte Produktaufnehmer einen ersten Abstand voneinander haben und der Greifer eingerichtet ist zum Aufnehmen je einer Verpackung an jeweils einem Produktaufnehmer, und einer zweiten Stellung, in der die einander benachbarten Produktaufnehmer einen zweiten, größeren Abstand voneinander haben und der Greifer eingerichtet ist zum Absetzen der aufgenommen Verpackungen auf die Transportvorrichtung, wobei der zweite Abstand wenigstens eineinhalbmal so groß ist wie der erste Abstand. Dies ermöglicht ein Beabstanden aller Verpackungen zueinander auf der Transportvorrichtung und einen weitgehend konstanten Verpackungsfluss auf einem Wägeband des Checkweighers mit minimalen Abweichungen, so dass die Transportgeschwindigkeit gering und/oder die Länge des Wägebands kurz gehalten werden kann.

Vorzugsweise ist der zweite Abstand wenigstens doppelt so groß wie der erste Abstand, um kleine Abweichungen in Bezug auf die einzelnen Abstände von aufeinanderfolgenden Verpackungen besser kompensieren zu können.

In einer besonders vorteilhaften Ausführung ist der Vereinzelungsroboter dazu konfiguriert, den Greifer bzw. die Produktaufnehmer auf eine Transportgeschwindigkeit der Transportvorrichtung aufzusynchronisieren. Damit ist eine höhere Genauigkeit der Ablageposition der Verpackungen auf die Transportvorrichtung möglich.

Die Transportgeschwindigkeit der Transportvorrichtung beträgt bevorzugt zwischen 20 m/min und 40 m/min.

Vorzugsweise sind die Produktaufnehmer des Greifers mittels einer horizontal translatorischen Bewegung im Abstand zueinander verstellbar, somit ist eine konstruktiv einfache Konstruktion für eine Abstandsänderung während der Umsetzbewegung ermöglicht.

Ein erfindungsgemäßes Verfahren zum Betrieb einer Verpackungsanlage, die eine Tiefziehverpackungsmaschine, eine Transportvorrichtung, einen Vereinzelungsroboter und einen Checkweigher umfasst, zeichnet sich dadurch aus, dass der Vereinzelungsroboter bei jeder Umsetzbewegung eine Gruppe von Verpackungen von der Tiefziehverpackungsmaschine auf die Transportvorrichtung umsetzt und dabei den ersten Abstand der aufgenommenen Verpackungen vor dem Ablegen der Verpackungen auf die Transportvorrichtung auf einen wenigstens eineinhalbfach so großen zweiten Abstand von den Verpackungen zueinander vergrößert.

Dabei wird bevorzugt der erste Abstand zwischen zwei Verpackungen innerhalb der Gruppe auf einem Abführband der Tiefziehverpackungsmaschine während einer Umsetzbewegung durch den Vereinzelungsroboter auf das Doppelte oder auf mehr als das Doppelte vergrößert, um kleine Abweichungen in Bezug auf die einzelnen Abstände von aufeinanderfolgenden Verpackungen besser kompensieren zu können.

In einer besonders vorteilhaften Ausführung wird mittels des Vereinzelungsroboters eine zweite Gruppe von Verpackungen derart nach einer ersten Gruppe von Verpackungen auf der Transportvorrichtung abgesetzt, dass ein dritter Abstand von einer letzten Verpackung einer ersten Gruppe zu einer ersten Verpackung einer zweiten direkt nachfolgenden Gruppe auf der Transportvorrichtung annähernd dem zweiten Abstand zwischen Verpackungen innerhalb den Gruppen entspricht. So lässt sich ein annähernd konstanter Verpackungsfluss mit weitestgehend konstanten Abständen der aufeinanderfolgenden Verpackungen bereits auf der Transportvorrichtung auf einfache Art realisieren. Dieser Abstand kann bereits der für den Checkweigher vorgesehene Abstand sein.

In einer bevorzugten Ausführungsform weist die Verpackungsanlage zwischen der Transportvorrichtung und dem Checkweigher ein Beschleunigungsband auf und mittels des Beschleunigungsbands wird der dritte Abstand zwischen den Verpackungen um weitere 25 % oder mehr vergrößert.

Im Folgenden wird ein vorteilhaftes Ausführungsbeispiel der Erfindung anhand einer Zeichnung näher erläutert. Im Einzelnen zeigen:
- Fig. 1: eine schematische Draufsicht einer erfindungsgemäße Verpackungsanlage,
- Fig. 2: eine schematische Seitenansicht der Transportvorrichtung in einer ersten Phase,
- Fig. 3: eine schematische Seitenansicht der Transportvorrichtung in einer zweiten Phase,
- Fig. 4: eine schematische Seitenansicht der Transportvorrichtung in einer dritten Phase und
- Fig. 5: eine schematische Draufsicht einer Variante der Verpackungsanlage mit einem Beschleunigungsband.

Gleiche Komponenten sind in den Figuren durchgängig mit gleichen Bezugszeichen versehen.

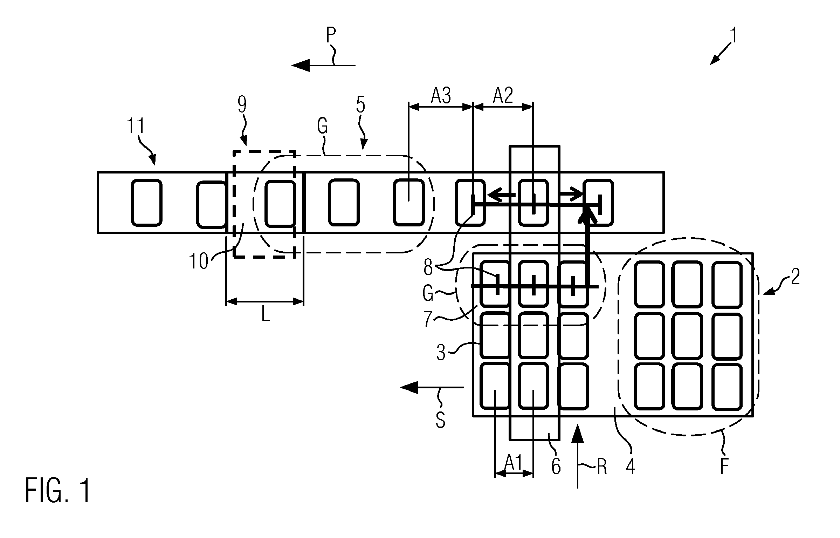

Figur 1 zeigt eine erfindungsgemäße Verpackungsanlage 1 in einer schematischen Draufsicht mit einer Teildarstellung einer intermittierend betriebenen Tiefziehverpackungsmaschine 2, die Formate F von neun Verpackungen 3 am ihrem Ende auf einem Abführband 4 bereitstellt. Das Format F weist drei Spuren S und drei Reihen R mit jeweils drei Verpackungen 3 auf, wobei die Spuren S längs in einer Produktionsrichtung P und die Reihen R quer zur Produktionsrichtung P ausgerichtet sind. Um die Verpackungen 3 vom Abführband 4 der Tiefziehverpackungsmaschine 2 spurenweise auf eine Transportvorrichtung 5 umzusetzen, ist ein Vereinzelungsroboter 6 vorgesehen, der einen Greifer 7 mit drei Produktaufnehmern 8 umfasst. Der Greifer 7 ist derart gestaltet, dass er die äußeren zwei Produktaufnehmer 8 gegenüber dem mittleren Produktaufnehmer 8 längs der Produktionsrichtung P auseinander bewegen kann, um die mittels Vakuum angesaugten Verpackungen 3 während einer quer zur Produktionsrichtung P erfolgenden Umsetzbewegung in der Produktionsrichtung P auseinander zu bewegen, um einen gewünschten Abstand A zwischen zwei in Produktionsrichtung P benachbarten Verpackungen 3 zu erreichen.

In Figur 1 ist der Greifer 7 in zwei verschiedenen Stellungen gezeigt. In der ersten Stellung befindet sich der Greifer 7 über drei Verpackungen 3, die in einer gemeinsamen Spur S von der Verpackungsmaschine 2 bereitgestellt wurden. Einander benachbarte Produktaufnehmer 8 der drei Produktaufnehmer 8 des Greifers 7 haben hier jeweils einen ersten Abstand A1 voneinander. Dieser erste Abstand A1 ist zumindest weitgehend identisch mit dem Abstand, mit dem zwei einander benachbarte Verpackungen 3 von der Verpackungsmaschine 2 hergestellt und bereitgestellt werden.

Figur 1 zeigt den Greifer 7 ferner in einer zweiten Position, die der Greifer 7 erreicht, wenn er sich über der Transportvorrichtung 5 befindet. In dieser zweiten Stellung haben zwei einander benachbarte Produktaufnehmer 8 einen zweiten, größeren Abstand A2 zueinander. Während der Greifer 7 in der ersten Stellung Verpackungen 3 aufnimmt, beispielsweise durch Anlegen eines Vakuums an den als Vakuumsauger ausgebildeten Produktaufnehmern 8, ist der Greifer 7 in der zweiten Stellung konfiguriert zum Absetzen der aufgenommenen Verpackungen 3 auf die Transportvorrichtung 5. Dies kann beispielsweise durch Abschalten des Vakuums an den als Sauggreifer ausgebildeten Produktaufnehmern 8 geschehen.

Der Greifer 7 bewegt sich von der ersten zur zweiten Stellung, während er gleichzeitig die durch einen Pfeil senkrecht zur Produktionsrichtung P dargestellte Umsetzbewegung durchführt. Denkbar wäre es allerdings auch, dass der Übergang von der ersten zur zweiten Stellung des Greifers 7 nicht gleichzeitig mit der Umsetzbewegung geschieht, sondern zumindest teilweise vor Beginn oder nach Abschluss der Umsetzbewegung.

In Produktionsrichtung P stromabwärts der Transportvorrichtung 5 ist ein Checkweigher 9, d.h. eine dynamische Kontrollwaage bzw. Bandwaage, mit einem Wägeband 10 vorgesehen, um jeweils eine einzelne Verpackung 3 während der Transportbewegung zu wiegen. Die Transportgeschwindigkeit des Wägebands 10 ist vorzugsweise synchron zur Transportgeschwindigkeit der ihm stromaufwärts vorgelagerten Transportvorrichtung 5. Das Wägeband 10 übergibt die Verpackung 3 an ein stromabwärts nachgelagertes Transportband 11.

Im Folgenden werden die Funktionsweise und die Vorteile der Erfindung näher erläutert. Der Checkweiger 9 benötigt beispielsweise eine Messzeit von 60 bis 120 ms, in der sich eine einzelne Verpackung 3 während dieser Messzeit allein und vollständig auf dem Wägeband 10 befinden muss. Aus der benötigten Mindest-Messzeit ergibt sich eine Abhängigkeit zwischen der Länge L des Wägebands 10 und der Transportgeschwindigkeit, mit der die Verpackung 3 über das Wägeband 10 transportiert wird. Ein Optimum kann dann erreicht werden, wenn die Verpackungen 3 gleichmäßig, nämlich kontinuierlich und immer mit einem gleichen Abstand, transportiert werden, um eine bestimmte Gesamtleistung zu erbringen. Bei ungleichmäßig transportierten Verpackungen 3 muss bei gleicher Gesamtleistung eine größere Länge des Wägebands 10 und zusätzlich eine erhöhte Transportgeschwindigkeit vorgesehen werden, um die Unregelmäßigkeiten der unterschiedlichen Abstände von aufeinanderfolgenden Verpackungen 3 auf der Transportvorrichtung 5 ausgleichen bzw. verarbeiten zu können.

Um auf der Transportvorrichtung 5 einen kontinuierlichen Strom von Verpackungen 3 mit einem annähernd konstanten Abstand zu erzeugen, ist folgender Ablauf vorgesehen. Die Verpackungen 3 einer Gruppe G, die der Anzahl von Verpackungen 3 einer Spur S im Format F entsprechen, weisen einen ersten Abstand A1 auf dem Abführband 4 der Tiefziehverpackungsmaschine 2 auf und werden vom Greifer 7 des Vereinzelungsroboters 6 aufgenommen. Die Produktaufnehmer 8, die jeweils eine einzelne Verpackung 3 mittig aufgenommen haben, sind mittels einer nicht näher dargestellten Mechanik derart verstellbar, dass die zwei äußeren Produktaufnehmer 8 horizontal translatorisch um beispielsweise 100 mm nach außen, also weg vom mittleren Produktaufnehmer 8, bewegt werden, während der Greifer 7 sich in Richtung zur Transportvorrichtung 5 bewegt. Vor dem Absetzen der Verpackungen 3 auf die Transportvorrichtung 5 weisen die Verpackungen 3 einen neuen zweiten Abstand A2 auf, der dem ersten Abstand A1 plus 100 mm entspricht. Der "Abstand" ist im Rahmen der Erfindung definiert durch den Mittenabstand von zwei benachbarten Verpackungen 3 einer gemeinsamen Gruppe G, oder durch den gegenseitigen Abstand der in Produktionsrichtung P vorne gelegenen Vorderkanten zweier benachbarter Verpackungen.

Der Greifer 7 setzt die Verpackungen 3 derart auf die kontinuierlich laufende Transportvorrichtung 5 ab, dass nach dem Absetzvorgang die erste Verpackung 3 dieser Gruppe G einen dritten Abstand A3 zur letzten Verpackung 3 der stromabwärts vorlaufenden Gruppe G hat. Der Abstand A3 entspricht annähernd dem Abstand A2, so dass alle auf der Transportvorrichtung 5 befindlichen Verpackungen 3 zumindest annähernd den gleichen Abstand A2 bzw. A3 von jeweils benachbarten Verpackungen 3 aufweisen. Der in diesem Zusammengang benutzte Begriff "annähernd" bedeutet, dass sich die Abstände A2 und A3 um weniger als 20 mm, vorzugsweise um weniger als 10 mm, voneinander unterscheiden.

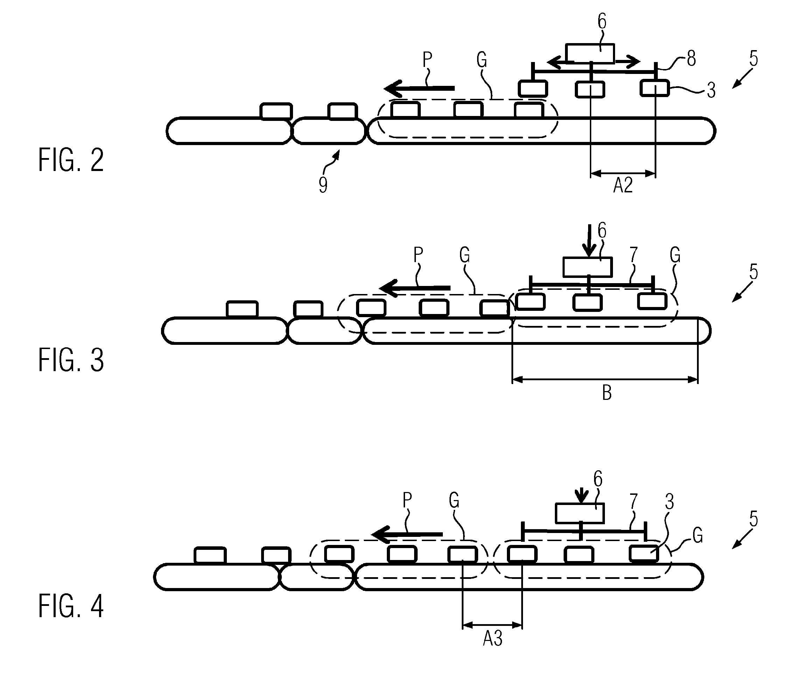

Fig. 2 zeigt eine schematische Seitenansicht der Transportvorrichtung 5 und des Vereinzelungsroboters 6 in einer ersten Phase. In dieser ersten Phase sind die Verpackungen 3 vom Greifer 7 mittels der Produktaufnehmer 8, die an ihrer Unterseite nicht näher dargestellte Vakuumsauger aufweisen, aufgenommen und gegenüber dem in Fig. 2 nicht mehr dargestellten Abführband 4 der Tiefziehverpackungsmaschine 2 angehoben worden. Dabei sind die äußeren Produktaufnehmer 8 jeweils in Pfeilrichtung vom mittleren Produktaufnehmer 8 beispielsweise um 100mm wegbewegt worden, so dass die Verpackungen 3 einen zweiten Abstand A2 zueinander, nämlich zur benachbarten Verpackung 3, aufweisen. Die bereits auf der Transportvorrichtung 5 befindliche Gruppe G von drei Verpackungen 3 wird mit der Transportgeschwindigkeit der Transportvorrichtung 5 in der Produktionsrichtung P transportiert, um sie dem Checkweigher 9 zuzuführen.

Fig. 3 zeigt die zweite Phase, bei der die auf der Transportvorrichtung 5 befindliche Gruppe G einen Ablagebereich B frei gemacht hat, damit der Greifer 7 die nächste Gruppe G zum Absetzen in Position bringen kann.

Fig. 4 zeigt die dritte Phase, bei der Greifer 7 die Gruppe G bzw. die drei Verpackungen 3 in dem Moment absetzt, sobald der Abstand A3 zwischen der letzten Verpackung 3 der vorlaufenden Gruppe G zur ersten Verpackung 3 der aktuell abzusetzenden Gruppe 3 dem Abstand A2 innerhalb einer Gruppe G entspricht. Bei der nachfolgenden Rückbewegung des Greifers 7 von der Transportvorrichtung 5 zurück zum Abführband 4 der Tiefziehverpackungsmaschine 2 bewegen sich die äußeren zwei Produktaufnehmer 8 wieder nach innen zurück auf den anfänglichen ersten Abstand A1, um eine nächste Gruppe G bzw. Spur S von drei Verpackungen 3 aufzunehmen und umzusetzen (siehe Fig. 1). In einer nicht näher dargestellten Variante weist der Vereinzelungsroboter 6 eine Einrichtung auf, die es dem Vereinzelungsroboter 6 ermöglicht, den Greifer 7 in Produktionsrichtung P zu bewegen, um die Produktaufnehmer 8 zum Ablegen der Verpackungen wenigstens zweitweise auf die Transportgeschwindigkeit der Transporteinrichtung aufzusynchronieren, um ein exaktes Platzieren der Verpackungen 3 zu ermöglichen.

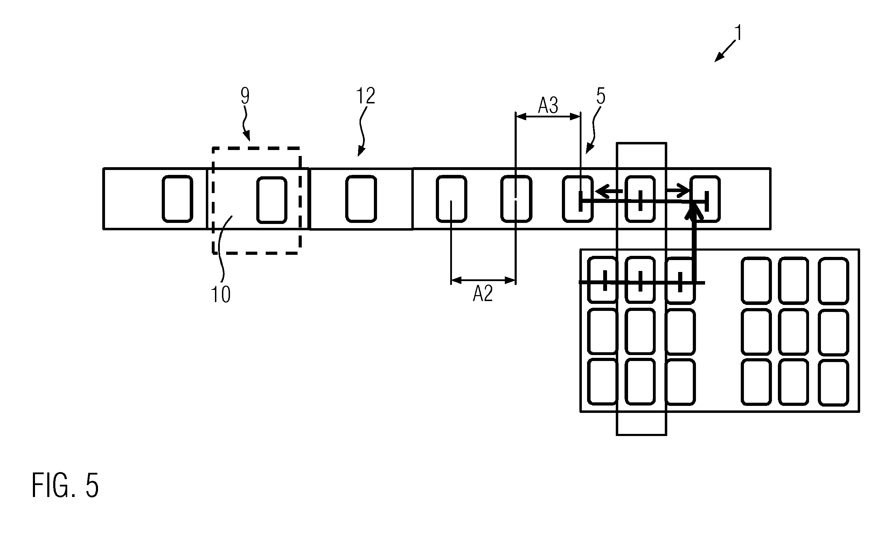

Fig. 5 zeigt eine schematische Draufsicht einer Variante der Verpackungsanlage 1 mit einem Beschleunigungsband 12, das zwischen der Transportvorrichtung 5 und dem Checkweigher 9 vorgesehen ist, um den dritten Abstand A3 und den zweiten Abstand A2 zu vergrößern, indem die Transportgeschwindigkeit des Beschleunigungsbands 12 beispielsweise um 20% schneller ist als die Transportgeschwindigkeit der Transportvorrichtung 5. In dieser Ausgestaltung der Verpackungsanlage 1 kann das Wägeband 10 länger ausgeführt sein als das Wägeband 10 aus Fig. 1.

## Patentansprüche

1. Verpackungsanlage (1), umfassend eine Tiefziehverpackungsmaschine (2), einen Vereinzelungsroboter (6) zum Umsetzen von Verpackungen (3), eine Transportvorrichtung (5) und einen Checkweigher (9), wobei der Vereinzelungsroboter (6) einen Greifer (7) mit mehreren zueinander verstellbaren Produktaufnehmern (8) aufweist, **dadurch gekennzeichnet, dass** die Produktaufnehmer (8) verstellbar sind zwischen einer ersten Stellung, in der einander benachbarte Produktaufnehmer (8) jeweils einen ersten Abstand (A1) zueinander aufweisen und in der der Greifer (7) eingerichtet ist zum Aufnehmen jeweils einer Verpackung (3) durch jeden Produktaufnehmer (8), und einer zweiten Stellung, in der einander benachbarte Produktaufnehmer (8) einen zweiten Abstand (A2) voneinander haben und der Greifer (7) eingerichtet ist zum Absetzen der mittels der Produktaufnehmer (8) ergriffenen Verpackungen auf die Transportvorrichtung (5), wobei der zweite Abstand (A2) wenigstens eineinhalbmal so groß ist wie der erste Abstand (A1).

2. Verpackungsanlage nach Anspruch 1, **dadurch gekennzeichnet, dass** der zweite Abstand (A2) wenigstens doppelt so groß ist wie der erste Abstand (A1).

3. Verpackungsanlage nach einem der vorangehenden Ansprüche, **dadurch gekennzeichnet, dass** der Vereinzelungsroboter (6) dazu konfiguriert ist, den Greifer (7) auf eine Transportgeschwindigkeit der Transportvorrichtung (5) aufzusynchronisieren.

4. Verpackungsanlage nach einem der vorangehenden Ansprüche, **dadurch gekennzeichnet, dass** die Transportgeschwindigkeit der Transportvorrichtung (5) 20 m/min bis 40 m/min beträgt.

5. Verpackungsanlage nach einem der vorangehenden Ansprüche, **dadurch gekennzeichnet, dass** die Produktaufnehmer (8) des Greifers (7) mittels einer horizontal translatorischen Bewegung im Abstand zueinander verstellbar sind.

6. Verfahren zum Betrieb einer Verpackungsanlage (1), die eine Tiefziehverpackungsmaschine (2), eine Transportvorrichtung (5), einen Vereinzelungsroboter (6) und einen Checkweigher (9) umfasst, **dadurch gekennzeichnet, dass** der Vereinzelungsroboter (6) bei jeder Umsetzbewegung eine Gruppe (G) von Verpackungen (3) von der Tiefziehverpackungsmaschine (2) auf die Transportvorrichtung (5) umsetzt und dabei einen ersten Abstand (A1) der aufgenommenen Verpackungen (3) vor dem Ablegen der Verpackungen (3) auf die Transportvorrichtung (5) auf einen wenigstens eineinhalbfach so großen zweiten Abstand (A2) von den Verpackungen (3) zueinander vergrößert.

7. Verfahren nach Anspruch 6, **dadurch gekennzeichnet, dass** der erste Abstand (A1) zwischen zwei Verpackungen (3) innerhalb der Gruppe (G) auf einem Abführband (4) der Tiefziehverpackungsmaschine (2) während einer Umsetzbewegung durch den Vereinzelungsroboter (6) auf mindestens das Doppelte vergrößert wird.

8. Verfahren nach Anspruch 6 oder 7, **dadurch gekennzeichnet, dass** mittels des Vereinzelungsroboters (6) eine zweite Gruppe (G) von Verpackungen (3) derart nach einer ersten Gruppe (G) von Verpackungen (3) auf der Transportvorrichtung (5) abgesetzt wird, dass ein dritter Abstand (A3) zwischen einer letzten Verpackung einer ersten Gruppe (G) und einer ersten Verpackung (3) einer zweiten, direkt nachfolgenden Gruppe (G) auf der Transportvorrichtung (5) zumindest annähernd dem zweiten Abstand (A2) zwischen Verpackungen (3) innerhalb der Gruppen (G) entspricht.

9. Verfahren nach einem der Ansprüche 6 bis 8, **dadurch gekennzeichnet, dass** die Verpackungsanlage (1) zwischen der Transportvorrichtung (5) und dem Checkweigher (9) ein Beschleunigungsband (12) aufweist und mittels des Beschleunigungsbands (12) der dritte Abstand (A3) zwischen den Verpackungen (3) um weitere 25 % oder mehr vergrößert wird.
